# EUROPÄISCHE PATENTSCHRIFT

(11) **EP 2 415 101 B1**
(45) Veröffentlichungstag und Bekanntmachung des Hinweises auf die Patenterteilung: **23.07.2014**
(21) Anmeldenummer: 10710830.0
(22) Anmeldetag: 16.03.2010
(51) Int. Cl.: H01M 2/08, H01M 2/02, H01M 2/04, H01M 10/04, H01M 6/00

(54) **KNOPFZELLE OHNE BÖRDELUNG**
BUTTON CELL WITHOUT FLANGING
PILE BOUTON SANS SERTISSAGE

(30) Priorität: 04.04.2009 DE 102009017514
(43) Veröffentlichungstag der Anmeldung: 08.02.2012
(73) Patentinhaber: VARTA Microbattery GmbH, 73479 Ellwangen (DE)
(72) Erfinder: BRENNER, Rolf, 73479 Ellwangen (DE)
(74) Vertreter: Patentanwälte Ruff, Wilhelm, Beier, Dauster & Partner
(86) Internationale Anmeldenummer: PCT/EP2010/053367
(87) Internationale Veröffentlichungsnummer: WO 2010/112332

(56) Entgegenhaltungen:
- WO-A1-2007/062838
- WO-A1-2009/121577
- DE-A1- 3 247 191
- GB-A- 2 110 464
- JP-A- 58 042 167

## Beschreibung

Die vorliegende Erfindung betrifft Knopfzellen mit einem Gehäuse aus einem Zellenbecher und einem Zellendeckel, die über eine Dichtung miteinander verbunden sind, sowie ein Verfahren zu Herstellung solcher Zellen.

Knopfzellen weisen üblicherweise ein Gehäuse aus einem Zellenbecher (oft auch als Gehäusenapf bezeichnet) und einem Zellendeckel auf. Zellenbecher und Zellendeckel können beispielsweise aus vernickeltem Tiefziehblech als Stanzziehteile hergestellt werden. Gewöhnlich ist der Zellenbecher positiv und der Gehäusedeckel negativ gepolt. In dem Gehäuse können die verschiedensten elektrochemischen Systeme enthalten sein, beispielsweise Zink/MnO₂, primäre und sekundäre Lithium-Systeme oder sekundäre Systeme wie Nickel/Cadmium oder Nickel/Metallhydrid.

Der flüssigkeitsdichte Verschluss von Knopfzellen erfolgt klassisch durch Umbördeln des Randes des Zellenbechers über den Rand des Zellendeckels in Verbindung mit einem Kunststoffring, der zwischen Zellenbecher und Zellendeckel angeordnet ist und der gleichzeitig als Dichtungselement sowie zur elektrischen Isolierung des Zellenbechers und des Zellendeckels dient. Derartige Knopfzellen sind beispielsweise in der DE 31 13 309 A1 beschrieben.

Aus der DE 32 47 191 A1 sind bördelfreie Knopfzellen bekannt, deren Gehäuse sich aus einem Anoden- und einem Kathodentopf zusammensetzt, die einen U-förmigen bzw. invertierten U-förmigen Querschnitt aufweisen. Die Gehäuseteile werden durch einen Schrumpfungs- oder Presspassungsvorgang zusammengefügt. Dabei wird eines der Gehäuseteile durch Erwärmung in einen gedehnten Zustand überführt und das andere in das gedehnte Gehäuseteil eingeschoben.

Aus der DE 196 47 593 A1 und der WO 2007/062838 A1 sind Knopfzellen bekannt, bei denen der erwähnte Kunststoffring durch ein Dichtungselement ersetzt wurde, das durch Tiefziehen aus einer Folie hergestellt wird. Die beschriebenen Foliendichtungen haben gegenüber klassischen Dichtungen aus Spritzguss den Vorteil, dass sie in einer geringeren Dicke herstellbar sind und entsprechend selbst ein relativ geringes Volumen einnehmen. Foliendichtungen erlauben entsprechend die Herstellung von Knopfzellen mit besonders hoher Kapazität.

Die WO 2007/062838 A1 offenbart darüber hinaus Zellendeckel, deren Randbereich einen U-förmig umgeschlagenen Querschnitt aufweist sowie Knopfzellen mit Zellenbechern deren Bodenbereich radial nach innen eingezogen ist.

Probleme bereitet bei all diesen Knopfzellen stets immer die Montage, da die Wandungen von Zellenbecher und Zellendeckel in der Regel sehr dünn gehalten sind und entsprechend beim Einwirken mechanischer Kräfte leicht Verformungen auftreten können. Als kritisch sind insbesondere die beim Bördelvorgang auftretenden Kräfte anzusehen. Die Bördelung dient dazu, einen Formschluss zwischen Zellenbecher und Zellendeckel herzustellen. Beim Umbördeln wird die Schnittkante des Zellenbechers über den Rand des Zellendeckels radial nach innen umgebogen. Die zwischen Zellenbecher und Zellendeckel befindliche Dichtung wird dabei zusammengepresst. Dabei treten in axialer Richtung Kräfte auf, die zu Deformierungen bis hin zu einem Einfallen des Bodens von Zellenbecher und Zellendeckel führen können. Sofern der Becher und der Deckel beim Umbördeln nicht sehr gleichmäßig belastet werden, kann es leicht zu Beschädigungen von Zellenbecher und/oder Zellendeckel und in der Folge zu Undichtigkeiten kommen.

Der vorliegenden Erfindung lag die Aufgabe zugrunde, eine technische Lösung bereitzustellen, bei der die genannten Probleme nicht auftreten. Der Fokus lag insbesondere auf der Bereitstellung eines neuen Verfahrens zur Herstellung von Knopfzellen, bei dem die zu montierenden Gehäuseteile möglichst geringen mechanischen Belastungen in axialer Richtung ausgesetzt werden. Die durch das Verfahren herstellbaren Knopfzellen sollen einen möglichst einfachen Aufbau bei gleichzeitig guten Dichtigkeitseigenschaften und einer hohen Kapazität aufweisen.

Diese Aufgabe wurde gelöst durch das Verfahren mit den Merkmalen des Anspruchs 1 sowie durch die Knopfzelle mit den Merkmalen des Anspruchs 8.

Wie bei fast allen gattungsgemäßen Verfahren zur Herstellung von Knopfzellen werden auch beim erfindungsgemäßen Verfahren ein Zellenbecher und ein Zellendeckel über eine Dichtung miteinander verbunden. Zusammen bilden Zellenbecher und Zellendeckel ein Gehäuse aus, das eine Aufnahme für die üblichen Innenkomponenten einer Knopfzelle wie Elektroden, Separator etc. bildet.

Die im Rahmen eines erfindungsgemäßen Verfahrens verwendeten Zellenbecher und Zellendeckel weisen jeweils einen Boden- bzw. einen Deckelbereich, einen Mantelbereich, einen zwischen Boden- bzw. Deckelbereich und Mantelbereich angeordneten Randbereich und eine Schnittkante auf.

Sowohl Boden- als auch Deckelbereich sind im wesentlichen eben ausgebildet, sie bilden in der Regel später die Pole aus, an denen die Stromabnahme durch einen Verbraucher erfolgt. In der fertigen (nach einem erfindungsgemäßen Verfahren gefertigten) Knopfzelle sind der Bodenbereich des Zellenbechers und der Deckelbereich des Zellendeckels im wesentlichen parallel zueinander ausgerichtet. Dagegen sind die Mantelbereiche von Zellenbecher und Zellendeckel in der fertigen Knopfzelle im wesentlichen orthogonal zum Boden- bzw. zum Deckelbereich ausgerichtet und weisen im wesentlichen eine zylindrische Geometrie auf. Vorzugsweise sind Innen- und Außenradius von Zellenbecher und Zellendeckel in den Mantelbereichen im wesentlichen konstant.

Die erwähnten Randbereiche von Zellenbecher und Zellendeckel bilden den Übergang zwischen den Mantelbereichen und dem Deckelbereich bzw. dem Bodenbereich. Sie sind also zum einen begrenzt durch die im wesentlichen eben ausgebildeten Boden- und Deckelbereiche, zum anderen durch die orthogonal zu diesen angeordneten im wesentlichen zylindrischen Mantelbereiche. Die Randbereiche können beispielsweise als scharfe Kante oder auch abgerundet ausgebildet sein.

Bei dem erfindungsgemäßen Verfahren geht man in der Regel stets so vor, dass zunächst eine Dichtung auf den Mantelbereich des Zellendeckels aufgebracht wird.

In einem weiteren Schritt wird dann der Zellendeckel mit der aufgebrachten Dichtung in den Zellenbecher eingeschoben, so dass sich ein Bereich ergibt, in dem die Mantelbereiche von Zellenbecher und Zellendeckel überlappen. Die Größe des Überlappungsbereiches bzw. das Verhältnis von überlappendem Bereich zu nicht überlappendem Bereichen ist dabei durch die jeweilige Höhe der Mantelbereiche von Zellenbecher und Zellendeckel sowie durch die Tiefe des Einschubs festgelegt.

Hinsichtlich des Mantelbereichs des Zellendeckels ist es vorgesehen, dass zwischen 20 % und 99 %, insbesondere zwischen 30 % und 99 %, besonders bevorzugt zwischen 50 % und 99 %, mit dem Mantelbereich des Zellenbechers überlappen (die Prozentzahlen beziehen sich jeweils auf die Höhe des Mantels bzw. des Mantelbereichs).

Vor dem Einschieben können in den Gehäusebecher und/oder in den Gehäusedeckel die sonstigen üblichen Bestandteile einer Knopfzelle (Elektroden, Separator, Elektrolyt etc.) eingesetzt werden.

Nach dem vollständigen Einschieben des Zellendeckels in den Zellenbecher wird auf den Mantelbereich des Zellenbechers, insbesondere im Bereich der Schnittkante, ein Druck ausgeübt, um das Gehäuse abzudichten. Dabei sollen die zusammengefügten Gehäuseteile möglichst keinen oder nur sehr geringen Belastungen in axialer Richtung unterliegen. Der Druck wird daher radial angelegt. Abgesehen von der bereits erwähnten Abdichtung des Gehäuses kann so auch der Außendurchmesser des Zellengehäuses kalibriert werden.

Besonders zeichnet sich ein erfindungsgemäßes Verfahren dadurch aus, dass die Höhen der Mantelbereiche von Zellenbecher und Zellendeckel derart aufeinander abgestimmt sind, dass die Schnittkante des Zellenbechers durch den Druck auf den Mantelbereich des Zellenbechers gegen den Mantelbereich des Zellendeckels gepresst wird. Die Höhen der Mantelbereiche sind also so gewählt, dass ein Umbiegen der Schnittkante des Zellenbechers nach innen über den Randbereich des vollständig in den Zellenbecher eingeschobenen Zellendeckels nicht möglich ist. Es findet entsprechend keine Umbördelung des Randes des Zellenbechers über den Randbereich des Zellendeckels statt.

In Folge dessen weist der Zellenbecher einer nach dem erfindungsgemäßen Verfahren gefertigten Knopfzelle einen Mantelbereich mit einem im wesentlichen konstanten Radius in Richtung der Schnittkante auf.

Überraschenderweise wurde gefunden, dass eine Umbördelung nicht zwingend erforderlich ist, um die Dichtigkeit und den Zusammenhalt von Gehäusen aus einem Zellenbecher und einem Zellendeckel zu gewährleisten. Gemäß dem erfindungsgemäßen Verfahren lassen sich auch ohne Umbördeln Knopfzellen herstellen, die hervorragende Dichtigkeitseigenschaften aufweisen.

Bei nach dem erfindungsgemäßen Verfahren hergestellten Knopfzellen besteht zwischen den Gehäusekomponenten Zellenbecher, Zellendeckel und Dichtung vorzugsweise eine ausschließlich kraftschlüssige Verbindung. Der Zusammenhalt der Komponenten wird also bevorzugt im wesentlichen nur durch Haftkraft gewährleistet.

Besonders bevorzugt wird bei einem erfindungsgemäßen Verfahren ein Zellenbecher eingesetzt, der zumindest in einem Teilbereich seines Mantels konisch ausgebildet ist, so dass zumindest sein Innendurchmesser in Richtung der Schnittkante zunimmt. Dadurch wird das Einschieben des Zellendeckels in den Zellenbecher deutlich erleichtert. Die Dimensionen von Zellenbecher und Zellendeckel sind bevorzugt so aufeinander abgestimmt, dass größere Gegenkräfte vorzugsweise erst bei nahezu vollständigem Einschub des Deckels in den Becher auftreten. Vorzugsweise liegt der Konuswinkel dabei zwischen 10 min und 3°, insbesondere zwischen 30 min und 1° 30 min.

Der Zellendeckel, der mit aufgebrachter Dichtung in den Zellenbecher eingeschoben wird, ist in bevorzugten Ausführungsformen zumindest in einem Teil des Mantelbereiches zylindrisch ausgebildet. Dies betrifft gegebenenfalls insbesondere den Teil des Mantelbereiches, der nach dem Einschieben des Zellendeckels in den Zellenbecher mit dem erwähnten konisch ausgebildeten Teilbereich des Zellenbechermantels überlappt. Besonders bevorzugt ist der Mantel des Zellendeckels und damit auch der Mantelbereich zur Gänze zylindrisch ausgebildet. Vorzugsweise weist der Zellendeckel im Mantelbereich also einen konstanten Außenradius auf. Dies betrifft gegebenenfalls insbesondere den Teil, der nach dem Einschieben des Zellendeckels mit dem konisch ausgebildeten Teil des Mantelbereichs des Zellenbechers überlappt.

Beim Einschieben eines Zellendeckels mit zylindrischem Mantelbereich in einen zumindest in einem Teilbereich seines Mantels konisch ausgebildeten Zellenbecher, wie er oben beschrieben wurde, entsteht in der Regel ein sich nach oben öffnender Spalt zwischen Zellenbecher und Zellendeckel. Dieser Spalt wird in der Regel durch den Druck auf den Mantelbereich des Zellenbechers wieder beseitigt. So wird der Druck auf den Mantelbereich des Zellenbechers gegebenenfalls so gewählt, dass der konisch ausgebildete Teil des Mantelbereichs des Zellenbechers nach innen gedrückt wird, bis die Innenseite des Zellenbechers und die Außenseite des Zellendeckels im überlappenden Bereich im wesentlichen gleichmäßig voneinander beabstandet sind. Die resultierende Knopfzelle weist Mantelbereiche auf, die parallel zueinander ausgerichtet sind, insbesondere im überlappenden Bereich.

Ein wichtiger Aspekt bei der vorliegenden Erfindung ist die Wahl der Dichtung, die den Zellenbecher mit dem Zellendeckel verbindet. Bei dieser handelt es sich um eine thermoplastische Kunsstoffolie, insbesondere um eine Folie, wie sie z.B. in der DE 196 47 593 A1 beschrieben ist.

Foliendichtungen können mit einer sehr gleichmäßigen Dicke hergestellt werden. Beim Anlegen eines geeigneten Drucks auf den Mantelbereich des Zellenbechers ergibt sich eine Presspassung, infolge derer die hergestellte Knopfzelle ganz hervorragende Dichtigkeitseigenschaften aufweist. So ermöglicht nicht zuletzt die Verwendung von Foliendichtungen den Verzicht auf ein Umbördeln des Randes des Zellenbechers, ohne im Gegenzug Nachteile bei sonstigen wichtigen Eigenschaften in Kauf nehmen zu müssen.

Ganz besonders bevorzugt kommen vorliegend Kunststoffdichtungen, insbesondere Kunststofffolien, auf Basis von Polyamid oder auf Basis von Polyetheretherketonen zum Einsatz.

Es ist bevorzugt, dass die Dichtung eine Ausgangsdicke im Bereich zwischen 50 µm und 250 µm, besonders bevorzugt zwischen 70 µm und 150 µm, insbesondere von ca. 100 µm, aufweist. Unter dem Begriff "Ausgangsdicke" soll vorliegend die Dicke verstanden werden, die die Dichtung aufweist, bevor sie auf den Mantel des Zellendeckels aufgebracht wird. Im Gegensatz dazu soll unter dem Begriff "Enddicke" vorliegend die Dicke der Dichtung in der fertigen Zelle verstanden werden. Es ist klar, dass diese zumindest im überlappenden Bereich in der Regel dem Abstand zwischen der Innenseite des Zellenbechers und der Außenseite des Zellendeckels entspricht.

Damit eine ausreichend hohe Reibung zwischen Zellenbecher und Zellendeckel entstehen kann, sollten sowohl die Außen- als auch die Innenradien von Becher und Deckel aufeinander sowie auf die Dicke der Foliendichtung abgestimmt werden. Nur so kann ein ausreichend hoher Pressdruck entstehen, der die beiden Einzelteile zusammenhält.

Für die im Rahmen eines erfindungsgemäßen Verfahrens verwendeten Teile gilt bevorzugt, dass die Differenz zwischen dem Außenradius des in den Zellenbecher einzuschiebenden Zellendeckels an der Schnittkante des Zellendeckels und dem kleinsten Innenradius des Zellenbechers in dem Teil des Mantelbereichs, der mit dem Mantelbereich des Zellendeckels überlappt, kleiner ist als die Ausgangsdicke der verwendeten Dichtung. Besonders bevorzugt beträgt die Differenz zwischen 10 % und 90 % der Ausgangsdicke, insbesondere zwischen 30 % und 70 %, ganz besonders bevorzugt ca. 50 %.

Nach dem Einschieben des Zellendeckels in den Zellenbecher wird ein Teil des Mantelbereiches des Zellenbechers radial nach innen eingezogen. Es handelt sich dabei insbesondere um den Teil des Mantelbereichs, der nicht mit dem Mantelbereich des Zellendeckels überlappt.

Es wurde gefunden, dass durch diesen radialen Einzug deutlich verbesserte Dichtigkeitseigenschaften erzielt werden können. Durch das Einziehen des Bechermantels wird ein radialer Druck auf den an der Innenwand des Gehäusebechers anliegenden Randabschnitt bzw. auf die zwischen Gehäusedeckel und Gehäusebecher angeordnete Dichtung ausgeübt, die in der Folge in diesem Bereich zusammengepresst wird.

Das Einziehen kann zeitgleich zu der bereits erwähnten Druckausübung auf den Mantelbereich des Zellenbechers erfolgen, bevorzugt erfolgt das Einziehen aber in einem späteren separaten Schritt.

Eine erfindungsgemäße Knopfzelle weist ein Gehäuse aus einem Zellenbecher und einem Zellendeckel auf. Zellenbecher und Zellendeckel sind dabei über eine Dichtung miteinander verbunden. Der Zellenbecher weist einen Bodenbereich, einen Mantelbereich, einen zwischen Bodenbereich und Mantelbereich liegenden Randbereich und eine Schnittkante auf. Letztere bildet den Öffnungsrand des Zellenbechers. Analoges gilt auch für den Zellendeckel. Dieser weist gleichfalls einen Deckelbereich, einen Mantelbereich sowie einen dazwischenliegenden Randbereich und eine Schnittkante auf.

Herstellbar ist eine erfindungsgemäße Knopfzelle insbesondere nach dem oben beschriebenen erfindungsgemäßen Verfahren. Insofern gelten die obigen Ausführungen zu den im Rahmen des erfindungsgemäßen Verfahrens verwendeten Komponenten (Zellenbecher, Zellendeckel, Dichtung) sowie zu den Eigenschaften der fertigen, nach einem erfindungsgemäßen Verfahren gefertigten Zelle auch für die im Folgenden beschriebene erfindungsgemäße Knopfzelle.

Besonders zeichnet sich eine erfindungsgemäße Knopfzelle dadurch aus, dass der Zellendeckel in den Zellenbecher eingeschoben ist, so dass die Mantelbereiche des Zellendeckels und des Zellenbechers überlappen, wobei der Innenradius des Zellenbechers im überlappenden Bereich in Richtung der Schnittkante im wesentlichen konstant ist. Die erfindungsgemäße Knopfzelle weist also keinen umgebördelten Becherrand auf, wie dies bei aus dem Stand der Technik bekannten Knopfzellen stets der Fall ist. Die Knopfzelle ist bördelfrei verschlossen.

Dies hat diverse Vorteile. So bedarf es zum Verschließen und Abdichten der Knopfzelle im wesentlichen nur radialer Kräfte, während axiale Kräfte, durch die Zellenbecher und Zellendeckel leicht deformiert werden können, wie dies eingangs geschildert wurde, kaum auftreten. Dies erleichtert die Prozessführung bei der Herstellung außerordentlich. Darüber hinaus können Zellenbecher mit einem kürzeren Mantel eingesetzt werden, da dieser nicht mehr bis in den Randbereich des Zellendeckels ragen muss. Damit verbunden ergibt sich eine erhebliche Materialeinsparung und natürlich auch ein Kostenvorteil.

Wie oben bereits angedeutet wurde, besteht zwischen Zellenbecher und Zellendeckel in axialer Richtung bevorzugt keine formschlüssige Verbindung. Stattdessen werden Zellenbecher und Zellendeckel in axialer Richtung bevorzugt ausschließlich durch eine kraftschlüssige Verbindung zusammengehalten.

Es ist bevorzugt, dass die Schnittkante des Zellenbechers im Mantelbereich des Zellendeckels anliegt. Vorzugsweise sind die Höhe des Mantelbereichs des Zellenbechers und des Zellendeckels derart aufeinander abgestimmt, dass die Schnittkante durch radialen Druck nur an den Mantelbereich des Zellendeckels gepresst werden kann. Damit kann die den Öffnungsrand des Zellenbechers bildende Schnittkante durch den bei der Fertigung der Knopfzelle angelegten Druck nicht nach innen umgebogen werden.

Besonders bevorzugt sind die Innenseite des Zellenbechers und die Außenseite des Zellendeckels in dem Bereich, in dem die Mantelbereiche von Zellenbecher und Zellendeckel überlappen, im wesentlichen gleichmäßig voneinander beabstandet. Dies ist insbesondere der Fall, wenn der Innen- und der Außenradius des Zellendeckels im überlappenden Bereich in Richtung der Schnittkante des Zellendeckels im wesentlichen konstant sind oder mit anderen Worten, wenn der Zellendeckel im Mantelbereich einwandig und zylindrisch ausgebildet ist.

In diesem Fall umfasst eine erfindungsgemäße Knopfzelle vorzugsweise einen Stützring, auf dem die Schnittkante des Zellendeckels aufsitzen kann, wenn dieser in den Zellenbecher vollständig eingeschoben ist.

Allerdings kann es auch bevorzugt sein, dass die Schnittkante des Zellendeckels in einer erfindungsgemäßen Knopfzelle radial nach innen oder nach außen umgebogen ist. So sind beispielsweise aus der DE 196 47 593 Gehäusedeckel mit durch Umschlagen des Randes gebildetem doppelwandigem Gehäusemantel bekannt. Der Einsatz solcher Gehäusedeckel gewährleistet eine erhöhte Stabilität. Darüber hinaus treten scharfe Kanten im Randbereich nicht auf, und auch die Auflagefläche solcher Gehäusedeckel ist gegenüber der herkömmlicher Gehäusedeckel deutlich erhöht. Entsprechend wird auch ein Stützring nicht benötigt.

Allerdings wirkt sich die Verwendung doppelwandiger Gehäusedeckel grundsätzlich negativ auf das zur Verfügung stehende Innenvolumen in einer Zelle aus. Es ist daher nicht unüblich, den Rand des Zellendeckels einer Knopfzelle nur im Randabschnitt umzubiegen.

In einer besonders bevorzugten Ausführungsform der erfindungsgemäßen Knopfzelle weist zumindest der dem Bodenbereich des Zellenbechers nahegelegene Teil des Mantelbereich des Zellendeckels einer erfindungsgemäßen Knopfzelle einen im wesentlichen L-förmigen Querschnitt auf. Der mit der Schnittkante des Zellendeckels umgebogene Teil des Mantelbereich des Zellendeckels ist dabei vorzugsweise im wesentlichen orthogonal zu nicht umgebogenen Bereichen des Mantelbereichs des Zellendeckels ausgerichtet, ist also ausgehend von diesen um ca. 80 ° bis 100 °, vorzugsweise 85 ° bis 95 °, insbesondere ca. 90 °, nach außen oder nach innen umgebogen. Ein solcher Zellendeckel ist z.B. in der WO 2007/062838 in Fig. 2 dargestellt.

In einer weiteren bevorzugten Ausführungsform weist zumindest der dem Bodenbereich des Zellenbechers nahegelegene Teil des Mantelbereichs des Zellendeckels einer erfindungsgemäßen Knopfzelle einen im wesentlichen U-förmigen Querschnitt auf. Der mit der Schnittkante des Zellendeckels umgebogene Teil des Mantelbereiches des Zellendeckels ist in dieser Ausführungsform soweit nach außen oder nach innen umgebogen, dass der umgebogene Bereich im wesentlichen parallel zu nicht umgebogenen Bereichen des Mantelbereichs des Zellendeckels ausgerichtet ist. Ausgehend von diesen ist er also um ca. 180 ° nach außen oder nach innen umgebogen, so dass man auch von einem umgeschlagenen Rand sprechen kann. Ein solcher Zellendeckel ist z.B. in der WO 2007/062838 in Fig. 7 dargestellt.

In Ausführungsformen, in denen die Schnittkante des Zellendeckels radial nach außen umgebogen ist, ist es bevorzugt, dass die Schnittkante bzw. der mit der Schnittkante des Zellendeckels umgebogene Teil des Mantelbereichs radial nach innen eingezogen ist. Dies gilt sowohl im Fall von Zellendeckeln mit L-förmig als auch mit U-förmig nach außen gebogenem Rand. Die Schnittkante des Zellendeckels beschreibt in dieser Ausführungsform bevorzugt einen Radius, der kleiner oder gleich dem Außenradius des nicht umgebogenen Teils des Mantelbereichs des Zellendeckels ist.

Es kann aber auch bevorzugt sein, dass der Außenradius des nicht umgebogenen Teils des Mantelbereichs des Zellendeckels den Radius der Schnittkante unterschreitet, was insbesondere im Hinblick auf die Dichtigkeit einer erfindungsgemäßen Knopfzelle von Vorteil sein kann. Die Differenz zwischen den Radien beträgt in dieser Ausführungsform vorzugsweise weniger als 50 % der Wandstärke des Zellendeckels.

Besonders bevorzugt sind nicht mehr als 50 % des Mantelbereiches des Zellendeckels (bezogen auf seine Gesamthöhe) nach außen oder nach innen umgebogen. Besonders bevorzugt sind es weniger als 25 %, insbesondere weniger als 10 %.

Betreffend die Beabstandung zwischen der Innenseite des Zellenbechers und der Außenseites des Zellendeckels in einer erfindungsgemäßen Knopfzelle gilt bevorzugt, dass diese im Bereich der Überlappung von Mantelbereich des Zellenbechers und Mantelbereich des Zellendeckels bevorzugt zwischen 10 µm und 75 µm, insbesondere zwischen 30 µm und 50 µm, beträgt. Wie oben bereits angesprochen, entspricht der Wert für die Beabstandung zwischen der Innenseite des Zellenbechers und der Außenseite des Zellendeckels im wesentlichen der "Enddicke" der Dichtung im Überlappungsbereich.

Als Zellenbecher kommen im Rahmen der vorliegenden Erfindung vorzugsweise Zellenbecher mit einer Wandstärke zwischen 30 µm und 150 µm zum Einsatz. Innerhalb dieses Bereiches sind Werte zwischen 70 µm und 100 µm weiter bevorzugt.

Ähnliches gilt für den Zellendeckel. Dieser wird vorzugsweise mit einer Wandstärke zwischen 50 µm und 200 µm, insbesondere zwischen 100 µm und 130 µm, eingesetzt.

Besonders bevorzugt bestehen Zellenbecher und/oder Zellendeckel einer erfindungsgemäßen Knopfzelle aus Metall, insbesondere aus Trimetall mit der Schichtabfolge Nickel, Stahl und Kupfer. Natürlich kann auch das eingangs erwähnte vernickelte Tiefziehblech verwendet werden.

Bei einer erfindungsgemäßen Knopfzelle ist zumindest ein Teil des nicht mit dem Mantelbereich des Zellendeckels überlappenden Mantelbereich des Zellenbechers radial nach innen eingezogen. Der Außenradius dieses Teils des Mantels ist entsprechend kleiner als der Außenradius des Mantels im Überlappungsbereich. Wie bereits oben erwähnt wurde, kann durch diesen Einzug eine erhöhte Dichtigkeit erreicht werden. Bevorzugt ist die Differenz der Außenradien kleiner als die Beabstandung zwischen der Innenseite des Zellenbechers und der Außenseite des Zellendeckels im überlappenden Bereich.

Die genannten und weitere Vorteile der Erfindung ergeben sich aus der nachfolgenden Beschreibung der Zeichnungen in Verbindung mit den Unteransprüchen. Dabei können die einzelnen Merkmale der Erfindung für sich allein oder in Kombination miteinander verwirklicht sein. Die beschriebenen Ausführungsformen dienen lediglich zur Erläuterung und zum besseren Verständnis der Erfindung und sind in keiner Weise einschränkend zu verstehen.

### Figurenbeschreibung

- Fig. 1: zeigt schematisch den Querschnitt des Gehäuses einer erfindungsgemäßen Knopfzelle und im Vergleich dazu das Gehäuse einer klassischen Knopfzelle mit umgebördeltem Becherrand.
- Fig. 2: illustriert das erfindungsgemäße Verfahren zur Herstellung einer Knopfzelle.

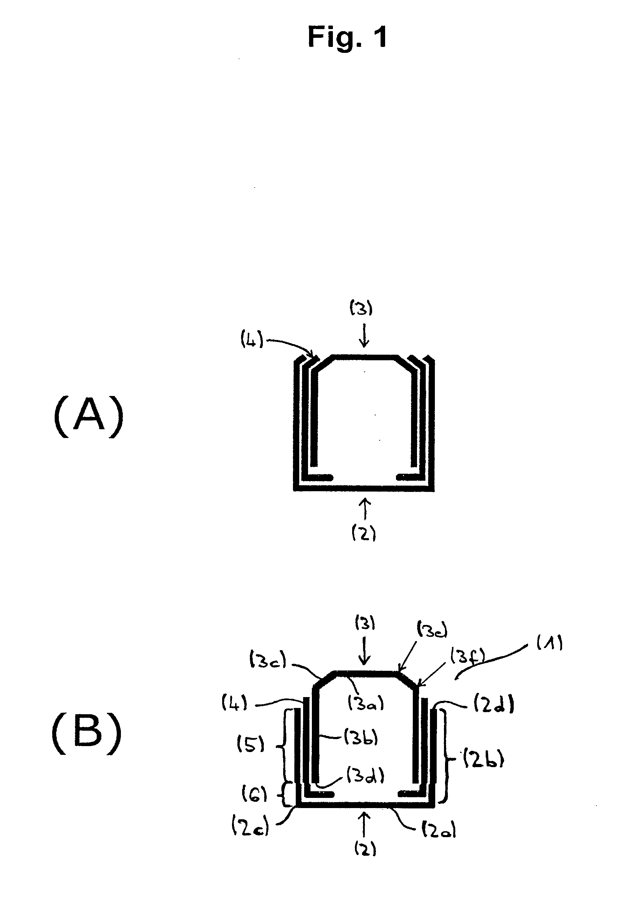

In **Fig. 1** sind das Gehäuse **1** einer erfindungsgemäßen Knopfzelle (B) und das einer klassischen Knopfzelle (A) mit umgebördeltem Becherrand dargestellt. Sowohl das Gehäuse der klassischen Knopfzelle als auch das der erfindungsgemäßen ist jeweils aus einem Zellenbecher **2** und einem Zellendeckel **3** zusammengesetzt. Diese sind jeweils über eine Dichtung **4** miteinander verbunden. Während bei der klassischen Knopfzelle der Öffnungsrand des Zellenbechers **2** jedoch über den Rand des Zellendeckels **3** nach innen umgebördelt ist, ist dies beim Gehäuse **1** der erfindungsgemäßen Knopfzelle nicht der Fall.

Wie gut zu erkennen ist, überlappen beim Gehäuse **1** der erfindungsgemäßen Knopfzelle die Mantelbereiche **2b** und **3b** des Zellendeckels **3** und des Zellenbechers **2,** wobei sich der Überlappungsbereich **5** ergibt. Der Innenradius des Zellenbechers **2** im überlappenden Bereich **5** ist bis zur Schnittkante **2d** im wesentlichen konstant. Das Gehäuse **1** einer erfindungsgemäßen Knopfzelle weist also keinen nach innen umgebördelten Becherrand auf, wie dies bei der klassischen Knopfzelle (A) der Fall ist. Die Schnittkante **2d** des Zellenbechers **2** liegt im Mantelbereich **3b** an der Außenseite des Zellenbechers **3** an.

Der Zellenbecher **2** umfasst den im wesentlichen ebenen Bodenbereich **2a,** den im wesentlichen zylindrisch ausgebildeten Mantelbereich **2b** und den Randbereich **2c.** Die Schnittkante **2d** bildet den Öffnungsrand des Zellenbechers **2.**

Der Zellendeckel **3** umfasst den im wesentlichen ebenen Bodenbereich **3a,** den im wesentlichen zylindrisch ausgebildeten Mantelbereich **2b** und den Randbereich **3c.** Die Schnittkante **3d** bildet den Öffnungsrand des Zellendeckels **3.**

Der Randbereich **2c** ist als scharfe Kante ausgebildet während der Randbereich **3c** einen vergleichsweise abgeflachten Übergang zwischen dem Deckelbereich **3a** und dem Mantelbereich **3b** bildet. Während bei klassischen Knopfzellen ein solcher abgeflachter Übergang erforderlich war, um das Umbördeln des Randes des Zellendeckels **3** zu ermöglichen, kann bei einer erfindungsgemäßen Knopfzelle darauf verzichtet werden. Es wäre also denkbar, den Bereich **3c** ebenfalls als scharfe Kante auszubilden. Begrenzt wird der Randbereich **3c** nach einer Seite hin an der Linie **3e** durch den im wesentlichen ebenen Deckelbereich **3a** und nach der anderen Seite an der Linie **3f** durch den umlaufenden, orthogonal zum im wesentlichen ebenen Deckelbereich **3a** ausgerichteten und im wesentlichen zylindrisch ausgebildeten Mantelbereich **3b.**

Dargestellt ist ferner der Bereich **6,** in dem der nicht mit dem Mantelbereich **3b** des Zellendeckels überlappende Mantelbereich **2b** des Zellenbechers **2** radial nach innen eingezogen ist. Der Außenradius des Mantels des Zellenbechers **2** ist entsprechend im Bereich **6** kleiner als der Außenradius des Mantels im Überlappungsbereich **5.**

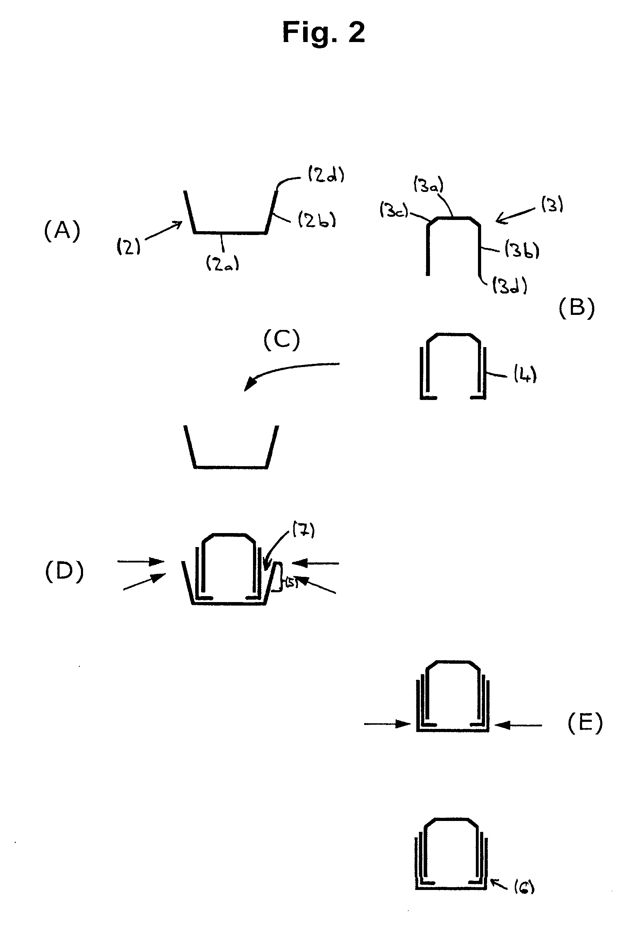

In **Fig. 2** sind die wesentlichen Schritte eines erfindungsgemäßen Verfahrens dargestellt (Schritte A - E). Im Schritt A werden ein Zellenbecher **2** und ein Zellendeckel **3** bereitgestellt. Der Zellenbecher **2** weist einen eben ausgebildeten Zellenboden **2a** auf sowie einen Mantelbereich **2b.** Der Mantelbereich **2b** ist konisch ausgebildet, wobei der Konuswinkel zu Zwecken der Veranschaulichung deutlich über den oben genannten bevorzugten Gradmaßen liegt. Die Schnittkante **2d** bildet den Öffnungsrand des Zellenbechers **2** und begrenzt damit auch den Mantelbereich auf einer Seite. Auf der anderen Seite ist der Mantelbereich **2b** durch den Randbereich **2c** begrenzt, der vorliegend als scharfe Kante ausgebildet ist. Der Zellendeckel **3** weist einen Zellenboden **3a** und einen Mantelbereich **3b** auf. Wie der Becherboden **2a** ist auch der Deckelboden **3a** im wesentlichen eben ausgebildet. Der Mantelbereich **3b** weist im Gegensatz zum konusförmig ausgestalteten Mantel des Zellenbechers **2** jedoch eine im wesentlichen zylindrische Geometrie auf. Begrenzt wird der Mantelbereich **3b** analog zum Mantel **2b** auf einer Seite durch die den Öffnungsrand des Deckels bildende Schnittkante **3d** und auf der anderen Seite durch den Übergangsbereich **3c.** Der Übergangsbereich **3c** ist dabei nicht als scharfe Kante ausgebildet, wie dies vergleichsweise beim Zellenbecher **2** der Fall ist.

Im Schritt B wird auf den Mantelbereich **3b** des Zellendeckels **3** eine Dichtung, insbesondere eine Dichtungsfolie **4,** aufgezogen. Bei der Dichtung kann es sich beispielsweise um eine Schrumpffolie handeln, die auf den Mantelbereich **3b** aufgeschrumpft werden kann. Wie gut zu erkennen ist, erstreckt sich die Dichtung nach oben hin fast bis zum Übergangsbereich **3c,** während sie im unteren Bereich um die Schnittkante **3d** des Zellendeckels **3** nach innen umgeschlagen ist.

Im Schritt C wird der Zellenbecher **3** mit der darauf aufgebrachten Dichtung **4** in den Zellenbecher **2** eingesetzt bzw. eingeschoben. Es resultiert eine zusammengesetzte Einheit mit einem sich nach oben hin öffnenden Spalt 7 zwischen der Außenwand des Zellendeckels **3** und der Innenwand des Zellenbechers **2.** Der Mantelbereich **3b** des Zellendeckels und der Mantelbereich **2b** des Zellenbechers überlappen dabei im Bereich **5.**

Im Schritt D werden der Mantelbereich **2b** und damit auch die Schnittkante **2d** durch radiale Kräfte nach innen gedrückt, so dass der nach oben sich öffnende Spalt **6** beseitigt wird. Es resultiert eine Knopfzelle, bei der die Mantelbereiche **3b** und **2b** von Zellendeckel **3** und Zellenbecher **2** parallel zueinander ausgerichtet sind und im wesentlichen gleichmäßig voneinander beabstandet sind, zumindest im überlappenden Bereich **5.**

In einem letzten, Schritt E wird in den Zellenbecher **2** ein Teil des Mantelbereichs **2b** radial nach innen eingezogen. Dies betrifft insbesondere den Teil des Zellenbechers **2,** der nicht mit dem Mantelbereich **3b** zum Bereich **5** überlappt. Aus dem radialen Einziehen resultiert der Einzug **6.** Im eingezogenen Bereich wird die Dichtung **4** gegen die Schnittkante **3d** bzw. den Öffnungsrand des Zellendeckels **3** gedrückt, was die Dichtigkeit der erfindungsgemäßen Knopfzelle stark verbessert.

## Patentansprüche

1. Verfahren zur Herstellung einer Knopfzelle ohne Bördelung mit einem Gehäuse (1) aus
- einem Zellenbecher (2) mit einem Bodenbereich (2a), einem Mantelbereich (2b), einem dazwischen liegenden Randbereich (2c) und einer Schnittkante (2d) sowie
- einem Zellendeckel (3) mit einem Deckelbereich (3a), einem Mantelbereich (3b), einem dazwischen liegenden Randbereich (3c) und einer Schnittkante (3d),
- die über eine Dichtung (4) miteinander verbunden sind,
wobei das Verfahren die folgenden Schritte umfasst:
- Aufbringen der Dichtung (4) auf den Mantelbereich (3b) des Zellendeckels (3),
- Einschieben des Zellendeckels (3) mit der Dichtung (4) in den Zellenbecher (2), wobei sich ein Bereich (5) ergibt, in dem zwischen 20 % und 99 % des Mantelbereichs (2b) des Zellenbechers (2) mit dem Mantelbereich (3b) des Zellendeckels (3) überlappen und
- Ausüben eines radialen Drucks auf den Mantelbereich (2b) des Zellenbechers (2) zum Abdichten des Gehäuses (1), wobei die Schnittkante (2d) des Zellenbechers (2) gegen den Mantelbereich (3b) des Zellendeckels (3) gepresst wird,
**dadurch gekennzeichnet, dass** es sich bei der Dichtung (4) um eine thermoplastische Kunststofffolie handelt und dass nach dem Einschieben des Zellendeckels (3) in den Zellenbecher (2) ein Teil des Mantelbereichs (2b) radial nach innen eingezogen wird.

2. Verfahren nach Anspruch 1, **dadurch gekennzeichnet, dass** der Zellenbecher (2), in den der Zellendeckel (3) mit der Dichtung (4) eingeschoben wird, zumindest in einem Teil des Mantelbereichs (2b) konisch ausgebildet ist, so dass sein Durchmesser in Richtung der Schnittkante (2d) zunimmt.

3. Verfahren nach Anspruch 2, **dadurch gekennzeichnet, dass** der Konuswinkel zwischen 10 min und 3 Grad, insbesondere zwischen 30 min und und 1 Grad 30 min, beträgt.

4. Verfahren nach einem der Ansprüche 1 bis 3, **dadurch gekennzeichnet, dass** der Zellendeckel (3), der mit der Dichtung (4) in den Zellenbecher (2) eingeschoben wird, zumindest in einem Teil des Mantelbereichs (3b) zylindrisch ausgebildet ist, insbesondere in dem Teil, der nach dem Einschieben des Zellendeckels (3) mit dem konisch ausgebildeten Teil des Mantelbereichs (2b) zum Bereich (5) überlappt.

5. Verfahren nach einem der Ansprüche 2 bis 4, **dadurch gekennzeichnet, dass** der Mantelbereich (2b), insbesondere der konisch ausgebildete Teil des Mantelbereichs (2b), durch den radialen Druck nach innen gedrückt wird, so dass die Innenseite des Zellenbechers (2) und die Außenseite des Zellendeckels (3) im überlappenden Bereich (5) gleichmäßig voneinander beabstandet sind.

6. Verfahren nach einem der vorhergehenden Ansprüche, **dadurch gekennzeichnet, dass** die Dichtung (4) eine Ausgangsdicke im Bereich zwischen 50 µm und 250 µm, bevorzugt zwischen 70 µm und 150 µm, besonders bevorzugt von ca. 100 µm, aufweist.

7. Verfahren nach Anspruch 6, **dadurch gekennzeichnet, dass** die Differenz zwischen dem Außenradius des in den Zellenbecher (2) einzuschiebenden Zellendeckels (3) an der Schnittkante (3d) und dem kleinsten Innenradius des Zellenbechers (2) in dem Teil des Mantelbereichs (2b), der mit dem Mantelbereich (3b) zum Bereich (5) überlappt, kleiner ist als die Ausgangsdicke der Dichtung (4).

8. Bördelfreie Knopfzelle mit einem Gehäuse (1) aus einem Zellenbecher (2) und einem Zellendeckel (3), die über eine Dichtung (4) aus einer thermoplastischen Kunststofffolie miteinander verbunden sind,
- wobei der Zellenbecher (2) einen Bodenbereich (2a), einen Mantelbereich (2b), einen dazwischen liegenden Randbereich (2c) und eine Schnittkante (2d) aufweist, und
- wobei der Zellendeckel (3) einen Deckelbereich (3a), einen Mantelbereich (3b), einen dazwischen liegenden Randbereich (3c) und eine Schnittkante (3d) aufweist,
wobei der Zellendeckel (3) in den Zellenbecher (2) eingeschoben ist, so dass im Bereich (5) zwischen 20 % und 99 % des Mantelbereichs (2b) des Zellenbechers (2) mit dem Mantelbereich (3b) des Zellendeckels (3) überlappen, und wobei der Innenradius des Zellenbechers (2) im Bereich (5) in Richtung der Schnittkante (2d) konstant ist, und
wobei zumindest ein Teil (6) des nicht mit dem Mantelbereich (3b) überlappenden Mantelbereichs (2b) radial nach innen eingezogen ist, so dass der Außenradius dieses Teils (6) des Mantels kleiner ist als der Außenradius des Mantels im Bereich (5).

9. Knopfzelle nach Anspruch 8, **dadurch gekennzeichnet, dass** zwischen Zellenbecher (2) und Zellendeckel (3) eine ausschließlich kraftschlüssige Verbindung besteht.

10. Knopfzelle nach Anspruch 8 oder Anspruch 9, **dadurch gekennzeichnet, dass** die Schnittkante (2d) am Mantelbereich (3b) anliegt.

11. Knopfzelle nach einem der Ansprüche 8 bis 10, **dadurch gekennzeichnet, dass** die Innenseite des Zellenbechers (2) und die Außenseite des Zellendeckels (3) im überlappenden Bereich (5) gleichmäßig voneinander beabstandet sind.

12. Knopfzelle nach einem der Ansprüche 8 bis 11, **dadurch gekennzeichnet, dass** die Schnittkante (3d) radial nach innen oder nach außen umgebogen ist.

13. Knopfzelle nach einem der Ansprüche 8 bis 12, **dadurch gekennzeichnet, dass** die Beabstandung zwischen der Innenseite des Zellenbechers (2) und der Außenseite des Zellendeckels (3) im überlappenden Bereich (5) zwischen 10 µm und 75 µm, insbesondere zwischen 30 µm und 50 µm, beträgt.

14. Knopfzelle nach einem der Ansprüche 8 bis 13, **dadurch gekennzeichnet, dass** die Differenz der Außenradien weniger beträgt als die Beabstandung zwischen der Innenseite des Zellenbechers (2) und der Außenseite des Zellendeckels (3) im überlappenden Bereich (5).

## Claims

1. A method for producing a button cell without flanging with a housing (1) composed of
- a cell cup (2) with a base region (2a), a lateral region (2b), an edge region (2c) lying there between and a cut edge (2d), and
- a cell cover (3) with a cover region (3a), a lateral region (3b), an edge region (3c) lying there between and a cut edge (3d),
- which are connected to one another via a seal (4),
wherein the method comprises the steps of:
- applying the seal (4) to the lateral region (3b) of the cell cover (3),
- inserting the cell cover (3) with the seal (4) into the cell cup (2), wherein a region (5) is formed in which between 20 % and 99 % of the lateral region (2b) of the cell cup (2) overlap the lateral region (3b) of the cell cover (3), and
- exerting a radial pressure on the lateral region (2b) of the cell cup (2) to seal the housing (1), wherein the cut edge (2d) of the cell cup (2) is pressed against the lateral region (3b) of the cell cover (3),
**characterized in that**
the seal (4) is a thermoplastic synthetic material film and **in that** after insertion of the cell cover (3) into the cell cup (2) a part of the lateral region (2b) is drawn radially inwardly.

2. The method according to claim 1, **characterized in that** the cell cup (2), in which the cell cover (3) with the seal (4) is inserted, is conical at least in part of the lateral region (2b) such that its diameter increases in the direction of the cut edge (2d).

3. The method according to claim 2, **characterized in that** the cone angle is between 10 minutes and 3 degrees, in particular between 30 minutes and 1 degree 30 minutes.

4. The method according to any one of the claims 1 to 3, **characterized in that** the cell cover (3), which with the seal (4) is inserted into the cell cup (2), is cylindrical at least in part of the lateral region (3b), in particular **in that** part which, after insertion of the cell cover (3), overlaps the conical part of the lateral region (2b) to provide the region (5).

5. The method according to any one of the claims 2 to 4, **characterized in that** the lateral region (2b), in particular the conical part of the lateral region (2b), is pushed inwardly by the radial pressure, such that the inside of the cell cup (2) and the outside of the cell cover (3) are at an equal distance from one another in the overlapping region (5).

6. The method according to any one of the preceding claims, **characterized in that** the seal (4) has an initial thickness in the range between 50 µm and 250 µm, preferably between 70 µm and 150 µm, particularly preferably of about 100 µm.

7. The method according to claim 6, **characterized in that** the difference between the external radius of the cell cover (3) to be inserted into the cell cup (2) at the cut edge (3d) and the smallest internal radius of the cell cup (2) **in that** part of the lateral region (2b) which overlaps with the lateral region (3b) to the region (5) is less than the initial thickness of the seal (4).

8. A button cell without flanging with a housing (1) composed of a cell cup (2) and a cell cover (3) which are connected to one another via a seal (4) made of a thermoplastic synthetic material film,
- wherein the cell cup (2) has a base region (2a), a lateral region (2b), an edge region (2c) lying there between and a cut edge (2d), and
- wherein the cell cover (3) has a cover region (3a), a lateral region (3b), an edge region (3c) lying there between and a cut edge (3d),
wherein the cell cover (3) is inserted into the cell cup (2) such that in a region (5) between 20 % and 99 % of the lateral region (2b) of the cell cup (2) overlap the lateral region (3b) of the cell cover (3), and wherein the internal radius of the cell cup (2) is constant in the region (5) in the direction of the cut edge (2d), and
wherein at least a part (6) of the lateral region (2b) not overlapping the lateral region (3b) is drawn radially inwardly such that the external radius of the part (6) of the lateral region is smaller than the external radius of the lateral region in the region (5).

9. The button cell according to claim 8, **characterized in that** the cell cup (2) and the cell cover (3) are interconnected exclusively via a force-fitting connection.

10. The button cell according to claim 8 or claim 9, **characterized in that** the cut edge (2d) abuts to the lateral region (3b).

11. The button cell according to any one of the claims 8 to 10, **characterized in that** the inside of the cell cup (2) and the outside of the cell cover (3) are an equal distance from one another in the overlapping region (5).

12. The button cell according to any one of the claims 8 to 11, **characterized in that** the cut edge (3d) is bent around inwards or outwards.

13. The button cell according to any one of the claims 8 to 12, **characterized in that** the distance between the inside of the cell cup (2) and the outside of the cell cover (3) in the overlapping region (5) is between 10 µm and 75 µm, in particular between 30 µm and 50 µm.

14. The button cell according to any one of the claims 8 to 13, **characterized in that** the difference between the external radii is less than the distance between the inside of the cell cup (2) and the outside of the cell cover (3) in the overlapping region (5).

## Revendications

1. Procédé de fabrication d'une pile bouton sans sertissage comprenant un boîtier (1) constitué
- d'un logement de pile (2) avec une région de fond (2a), une région d'enveloppe (2b), une région de bord (2c) située entre elles et une arête de coupe (2d) et
- d'un couvercle de pile (3) avec une région de couvercle (3a), une région d'enveloppe (3b), une région de bord (3c) située entre elles et une arête de coupe (3d),
- qui sont connectés l'un à l'autre par le biais d'un joint d'étanchéité (4),
le procédé comprenant les étapes suivantes :
- application du joint d'étanchéité (4) sur la région d'enveloppe (3b) du couvercle de pile (3),
- insertion du couvercle de pile (3) avec le joint d'étanchéité (4) dans le logement de pile (2), une région (5) se formant, dans laquelle entre 20 % et 99 % de la région d'enveloppe (2b) du logement de pile (2) et de la région d'enveloppe (3b) du couvercle de pile (3) se chevauchent et
- application d'une pression radiale sur la région d'enveloppe (2b) du logement de pile (2) pour étanchéifier le boîtier (1), l'arête de coupe (2d) du logement de pile (2) étant pressée contre la région d'enveloppe (3b) du couvercle de pile (3),
**caractérisé en ce que** le joint d'étanchéité (4) est un film plastique thermoplastique et **en ce qu'**après l'insertion du couvercle de pile (3) dans le logement de pile (2), une partie de la région d'enveloppe (2b) est renfoncée radialement vers l'intérieur.

2. Procédé selon la revendication 1, **caractérisé en ce que** le logement de pile (2), dans lequel est inséré le couvercle de pile (3) avec le joint d'étanchéité (4), est réalisé sous forme conique au moins dans une partie de la région d'enveloppe (2b) de telle sorte que son diamètre augmente dans la direction de l'arête de coupe (2d).

3. Procédé selon la revendication 2, **caractérisé en ce que** l'angle de conicité est compris entre 10 min et 3 degrés, en particulier entre 30 min et 1 degré 30 min.

4. Procédé selon l'une quelconque des revendications 1 à 3, **caractérisé en ce que** le couvercle de pile (3) qui est inséré avec le joint d'étanchéité (4) dans le logement de pile (2) est réalisé sous forme cylindrique au moins dans une partie de la région d'enveloppe (3b), en particulier dans la partie qui, après l'insertion du couvercle de pile (3), chevauche la partie réalisée sous forme conique de la région d'enveloppe (2b) pour obtenir la région (5).

5. Procédé selon l'une quelconque des revendications 2 à 4, **caractérisé en ce que** la région d'enveloppe (2b), en particulier la partie réalisée sous forme conique de la région d'enveloppe (2b), est pressée vers l'intérieur par la pression radiale, de telle sorte que le côté intérieur du logement de pile (2) et le côté extérieur du couvercle de pile (3) soient espacés uniformément l'un de l'autre dans la région de chevauchement (5).

6. Procédé selon l'une quelconque des revendications précédentes, **caractérisé en ce que** le joint d'étanchéité (4) présente une épaisseur initiale comprise entre 50 µm et 250 µm, de préférence comprise entre 70 µm et 150 µm, particulièrement préférablement d'environ 100 µm.

7. Procédé selon la revendication 6, **caractérisé en ce que** la différence entre le rayon extérieur du couvercle de pile (3) devant être inséré dans le logement de pile (2) au niveau de l'arête de coupe (3d) et le plus petit rayon intérieur du logement de pile (2) dans la partie de la région d'enveloppe (2b) qui chevauche la région d'enveloppe (3b) pour former la région (5) est inférieure à l'épaisseur de départ du joint d'étanchéité (4).

8. Pile bouton sans sertissage comprenant un boîtier (1) constitué d'un logement de pile (2) et d'un couvercle de pile (3), qui sont connectés l'un à l'autre par le biais d'un joint d'étanchéité (4) constitué d'un film plastique thermoplastique,
- le logement de pile (2) présentant une région de fond (2a), une région d'enveloppe (2b), une région de bord (2c) située entre elles et une arête de coupe (2d) et
- le couvercle de pile (3) présentant une région de couvercle (3a), une région d'enveloppe (3b), une région de bord (3c) située entre elles et une arête de coupe (3d),
le couvercle de pile (3) étant inséré dans le logement de pile (2), de telle sorte que dans la région (5), entre 20 % et 99 % de la région d'enveloppe (2b) du logement de pile (2) et de la région d'enveloppe (3b) du couvercle de pile (3) se chevauchent et le rayon intérieur du logement de pile (2) dans la région (5) étant constant dans la direction de l'arête de coupe (2d), et
au moins une partie (6) de la région d'enveloppe (2b) ne chevauchant pas la région d'enveloppe (3b) étant renfoncée radialement vers l'intérieur de telle sorte que le rayon extérieur de cette partie (6) de l'enveloppe soit inférieur au rayon extérieur de l'enveloppe dans la région (5).

9. Pile bouton selon la revendication 8, **caractérisée en ce qu'**entre le logement de pile (2) et le couvercle de pile (3) existe une connexion exclusivement par engagement par force.

10. Pile bouton selon la revendication 8 ou la revendication 9, **caractérisée en ce que** l'arête de coupe (2d) s'applique contre la région d'enveloppe (3b).

11. Pile bouton selon l'une quelconque des revendications 8 à 10, **caractérisée en ce que** le côté intérieur du logement de pile (2) et le côté extérieur du couvercle de pile (3) sont espacés uniformément l'un de l'autre dans la région de chevauchement (5).

12. Pile bouton selon l'une quelconque des revendications 8 à 11, **caractérisée en ce que** l'arête de coupe (3d) est recourbée radialement vers l'intérieur ou vers l'extérieur.

13. Pile bouton selon l'une quelconque des revendications 8 à 12, **caractérisée en ce que** l'espacement entre le côté intérieur du logement de pile (2) et le côté extérieur du couvercle de pile (3) dans la région de chevauchement (5) est compris entre 10 µm et 75 µm, en particulier entre 30 µm et 50 µm.

14. Pile bouton selon l'une quelconque des revendications 8 à 13, **caractérisée en ce que** la différence entre les rayons extérieurs est inférieure à l'espacement entre le côté intérieur du logement de pile (2) et le côté extérieur du couvercle de pile (3) dans la région de chevauchement (5).
